Europäisches Patentamt

European Patent Office

Office européen des brevets

(11) Publication number: **0 346 918**
**A2**

# (12) EUROPEAN PATENT APPLICATION

(21) Application number: **89110942.3**

(22) Date of filing: **16.06.89**

(51) Int. Cl.⁴: **G06F 12/08**

(30) Priority: **17.06.88 US 207880**

(43) Date of publication of application:
**20.12.89 Bulletin 89/51**

(84) Designated Contracting States:
**DE FR GB**

(71) Applicant: **Modular Computer Systems Inc.**
**Box 60 99 1650 West McNab Road**
**Fort Lauderdale Fl 33310(US)**

(72) Inventor: **Ripy, Paul B.**
**1311 SW 71 Terrance**
**N. Lauderdale, Florida 33068(US)**

(74) Representative: **Vogl, Leo, Dipl.-Ing.**
**AEG Aktiengesellschaft Theodor-Stern-Kai 1**
**D-6000 Frankfurt am Main 70(DE)**

(54) **Device for cache buffer management.**

(57) In a device for managing a disc cache buffer a cell address decoder which generates a unitary cells select and a function control logic is provided which writes a data value to a cell of the buffer which is addressed by the positional location address via the cell address decoder. The function control logic allows to find a data value if present in one of the cells and to return a positional location value relativ to the cell address.

FIG.1

DISC CACHE BUFFER MANAGER

## A Device for Cache Buffer Management

### Background of the Invention

In order to support a 4 giga block logical block address, for instance, a caching mechanism must be able to handle a 32-bit address. Up to date, software algorithms such as "search list" and "hashing" have been used to search a table to find out if a disc cache page exist in a local buffer. Because processor architectures are constantly advancing, the demand on the disc systems to serve the software with rapid file access, is ever increasing. As the demand on disc systems increase, the software disc cache mechanisms become inadequate.

In order to facilitate a speedy cache address compare, "Hit", a disc controller must use a hardware 32-bit Content Addressable Memory. Currently available hardware CAM implementations are either to slow, i.e.: several milliseconds, or cost prohibitive, i.e.: 4 giga entry RAM as a H/W map.

### Summary of the Invention

It is an object of the invention to provide a device for managing a cache buffer system which provides the foundation for a high speed disc cache system. According to the invention a device for managing a disc cache buffer system is provided, wherein a cell address decoder is provided which generates a unitary cell select, wherein a function control logic is provided which writes a data value to a cell of the buffer which is addressed by the positional location address via the cell address decoder and wherein the function control logic allows to find a data value if present in one of the cells and to return a positional location value relativ to the cell address.

The device according to the invention allocates cache pages entries for an external buffer and provides a fast method for knowing if a cache page is in the disc cache buffer. The device according to the invention supports cache page entry invalidation, cache page entries and is cascadable up to more devices.

### Brief Description of the Drawings

The invention will now be described in greater detail, by way of examples, with reference to the drawings, in which

Fig. 1 shows a Disc Cache Buffer Manager according to the invention;

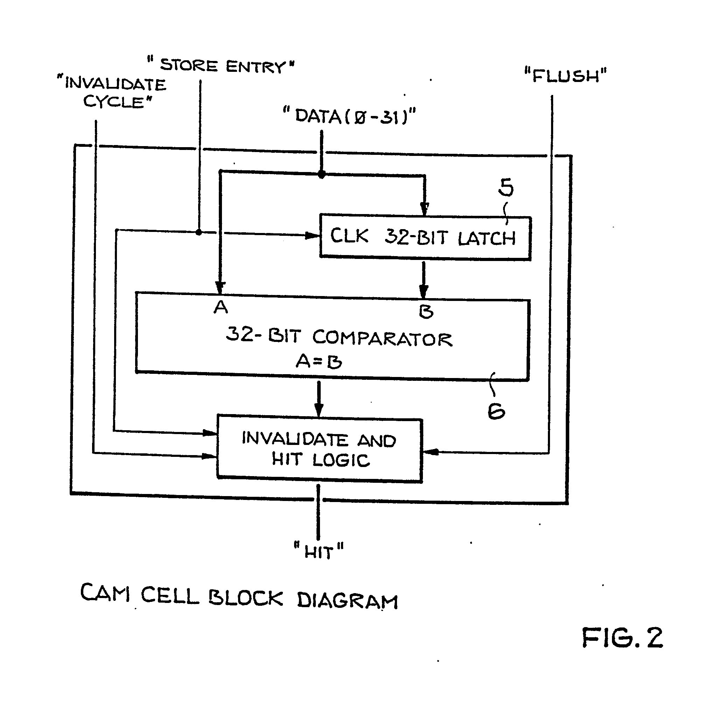

Fig. 2 shows a Cam Cell Block Diagram.

### Description of the Preferred Embodiments

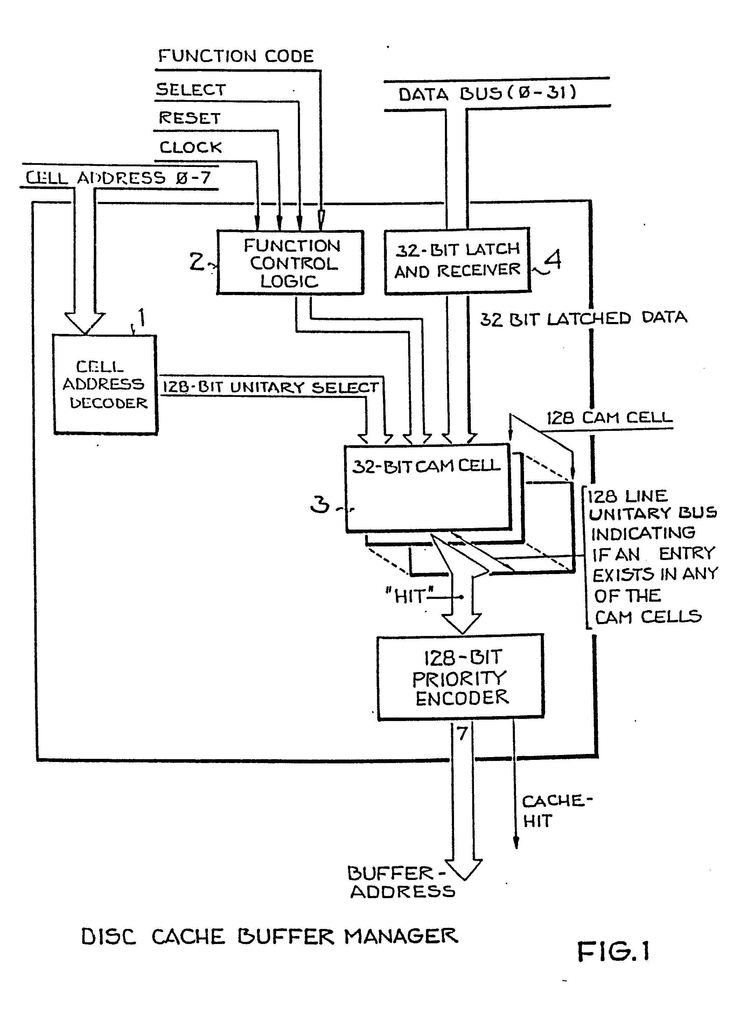

The device of Figure 1 is an Application Specific Integrated Circuit based design. Each such device has functional blocks of logic that support a Least Recently Cached allocation mechanism and a set of 128 32-bit CAM cells, for instance. In addition, the device has all the logic necessary to support automatic configuration when multiple devices are cascaded for expanded cache entry capability.

The Least Recently Cached (LRC) logic allocates disc cache entries in the CAM cells. Each Disc Cache Buffer Manager is capable of supporting 128 cache entries. The LRC algorithm implies that the last 128 disc read operations are currently stored in the disc cache buffer. This is accomplished via a sequential counter circuit. Anytime the user wants to allocate a disc cache entry, i.e.: during a disc read, they present the logical block address on the data bus and assert the function code for an allocate operation to the device. This in turn updates the selected CAM cell data register and increments the CAM cell address to the next CAM cell. When Disc Cache Buffer Manager (DCBM) devices are used in a cascaded fashion, the LRC logic is gate enabled by the previous DCBM in the chain when that device reaches maximum CAM cell count. Therefore each DCBM must gate out a "ripple carry" when cell count is at a maximum and not resume the LRC counting mechanism until it receive the gated enable from the previous DCBM in the chain.

The CAM cells are capable, in parallel, of comparing a single 32-bit data value to a set of 128 stored cache page entries. If the value being sought for is in the CAM, the device will signal this condition and provided a 13-bit associated address component. This address component along with the which block in the page pointer and which byte in block pointer, comprise the entire External Disc Cache buffer address.

In summary, the device according to the invention is capable of accelerating every aspect of Disc Cache buffer management. The values chosen as far as the number of CAM cells per device and number of devices per array where arbitrary, and were picked for example purposes only. The amount of CAM cells per device is limited only by the amount of transistors available in ASIC technology.

The Disc Cache Buffer Manager of figure 1 contains a cell address decoder 1 (least recently cached logic) which takes a 7 bit binary encoded and generates a 128 unitary cells select. The function control logic 2 of figure 1 allows the operator to perform three distinct functions. One of these functions is to write a data value to a cell of the buffer 3 which is addressed by the positional location address via the cell address decoder 1. The second function of the function control logic 2 is to allow the whole apparatus to find a 32 bit data value if present in one of the 128 cells and return a positional location value relativ to the cell address. The third function of the function controll logic 2 allows the user to invalidate the contents of a cell addressed by the positional location address via the cell address decoder 1.

The latch and reciever 4 of figure 1 buffers the data during a search operation and is used to store the data against a 32 bit cam cell. A cam cell contains according to figure 3 a 32 bit latch 5 and a 32 bit comparator 6 that is used to compare the contents of the 32 bit latch and reciever 4. The cam cell also contains the necessary logic to indicate wheter the contents of the cell latch is considered to be valid.

The 128-bit priority encoder 7 is used to determine which one of the 128 cam cells contains the valid data comparison and generates a 7 bit binary incoded value to indicate which one of the 128 cells had the comparison. It also provides a unitary signal that indicates that a match was found in the apparatus.

## Claims

1. A device for managing a disc cache buffer, wherein a cell address decoder is provided which generates a unitary cells select, wherein a function control logic is provided which writes a data value to a cell of the buffer which is addressed by the positional location address via the cell address decoder and wherein the function control logic allows to find a data value if present in one of the cells and to return a positional location value relativ to the cell address.

2. A device according to claim 1, wherein a latch and reciever is provided which buffers the data during a search operating and which stores the data against a cell.

3. A device according to claim 1, wherein a cell contains a latch and a comparator which compares the contents of the cell latch against the contents of the latch and reciever.

FUNCTION CODE

SELECT

RESET

CLOCK

DATA BUS (Ø-31)

CELL ADDRESS Ø-7

2 ~ FUNCTION CONTROL LOGIC

32-BIT LATCH AND RECEIVER ~ 4

1

CELL ADDRESS DECODER

128-BIT UNITARY SELECT

32 BIT LATCHED DATA

128 CAM CELL

32-BIT CAM CELL

3 ~

128 LINE UNITARY BUS INDICATING IF AN ENTRY EXISTS IN ANY OF THE CAM CELLS

"HIT"

128-BIT PRIORITY ENCODER

7

CACHE-HIT

BUFFER-ADDRESS

DISC CACHE BUFFER MANAGER

FIG.1

CAM CELL BLOCK DIAGRAM

FIG. 2